# EUROPEAN PATENT APPLICATION

(11) **EP 4 669 005 A1**
(43) Date of publication of application: **24.12.2025**
(21) Application number: 24757124.3
(22) Date of filing: 07.02.2024
(51) Int. Cl.: H04W 74/04, H04W 74/00, H04L 5/00, H04W 84/12, H04W 72/50, H04L 27/26, H04W 76/14, H04W 72/04

(54) **METHOD AND APPARATUS FOR PERFORMING RELAY TRANSMISSION ON BASIS OF TXOP SHARING TRIGGER FRAME IN WIRELESS LAN SYSTEM**

(30) Priority: 14.02.2023 KR 20230019563; 15.02.2023 KR 20230020253; 21.04.2023 KR 20230052938; 29.12.2023 KR 20230197596
(71) Applicant: LG Electronics Inc., Yeongdeungpo-gu Seoul 07336 (KR)
(72) Inventor: LIM, Dongguk, Seoul 06772 (KR); CHUN, Jinyoung, Seoul 06772 (KR); CHOI, Jinsoo, Seoul 06772 (KR); PARK, Eunsung, Seoul 06772 (KR); JANG, Insun, Seoul 06772 (KR)
(74) Representative: Mooser, Sebastian Thomas
(86) International application number: PCT/KR2024/001848
(87) International publication number: WO 2024/172395

(57) **Abstract**

Disclosed are a method and apparatus operating in a wireless LAN system. A method performed by a first station (STA) in a wireless LAN system, according to an embodiment of the present disclosure, comprises the steps of: receiving, from an access point (AP), an MU-RTS TXS trigger frame including TXOP information assigned for performing a relay operation; and performing the relay operation on the basis of the MU-RTS TXS trigger frame, wherein a common information field of the MU-RTS TXS trigger frame comprises first information indicating that the MU-RTS TXS trigger frame is for a TXOP sharing procedure for the relay operation, and the first information may be based on at least one of a specific subfield related to the relay operation or triggered TXOP sharing mode subfield.

## Description

### [TECHNICAL FIELD]

The present disclosure relates to a communication operation in a wireless local area network (WLAN) system, and more particularly, to a method and device for performing relay transmission within a specific time period based on a transmission opportunity (TXOP) shared trigger frame in a next-generation wireless LAN system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a method and device for performing relay transmission based on a trigger frame in a wireless LAN system.

The technical problem of the present disclosure is to provide a method and device for setting/indicating a TXOP based on a trigger frame for relay transmission.

The technical objects to be achieved by the present disclosure are not limited to the above-described technical objects, and other technical objects which are not described herein will be clearly understood by those skilled in the pertinent art from the following description.

### [Technical Solution]

According to one embodiment of the present disclosure, a method performed by a first station (STA) in a wireless LAN system may include receiving a multi-user (MU) request to send (RTS) transmission opportunity sharing (TXS) trigger frame including transmission opportunity (TXOP) information allocated for performing a relay operation from an access point (AP); and performing a relay operation based on the MU-RTS TXS trigger frame, and a common information field of the MU-RTS TXS trigger frame may include first information indicating that the MU-RTS TXS trigger frame is for a TXOP sharing procedure for the relay operation, and the first information may be based on at least one of a specific subfield related to the relay operation or a triggered TXOP sharing mode subfield.

According to another embodiment of the present disclosure, a method performed by an access point (AP) in a wireless LAN system may include transmitting a multi-user (MU) request to send (RTS) transmission opportunity sharing (TXS) trigger frame including transmission opportunity (TXOP) information allocated for performing a relay operation to a first station (STA); and performing a relay operation based on the MU-RTS TXS trigger frame, and a common information field of the MU-RTS TXS trigger frame may include first information indicating that the MU-RTS TXS trigger frame is for a TXOP sharing procedure for the relay operation, and the first information may be based on at least one of a specific subfield related to the relay operation or a triggered TXOP sharing mode subfield.

### [Technical Effects]

According to various embodiments of the present disclosure, a method and apparatus for performing relay transmission in a wireless LAN system may be provided.

According to various embodiments of the present disclosure, a method and apparatus for setting/indicating a TXOP based on a trigger frame for relay transmission are provided.

According to various embodiments of the present disclosure, the relay transmission procedure can reduce the impact of range and obstacles, and improve the reception SNR of an STA, thereby reducing delay and improving throughput for signal transmission.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 illustrates an exemplary format of a trigger frame to which the present disclosure may be applied.
FIG. 9 is a flowchart illustrating a method performed by a first STA according to an embodiment of the present disclosure.
FIG. 10 is a flowchart illustrating a method performed by an AP according to an embodiment of the present disclosure.
FIG. 11 illustrates a configuration of a relay operation element according to an embodiment of the present disclosure.
FIG. 12 illustrates a configuration of an MU-RTS TXS trigger frame according to an embodiment of the present disclosure.
FIG. 13 illustrates a user information field of an MU-RTS TXS trigger frame according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

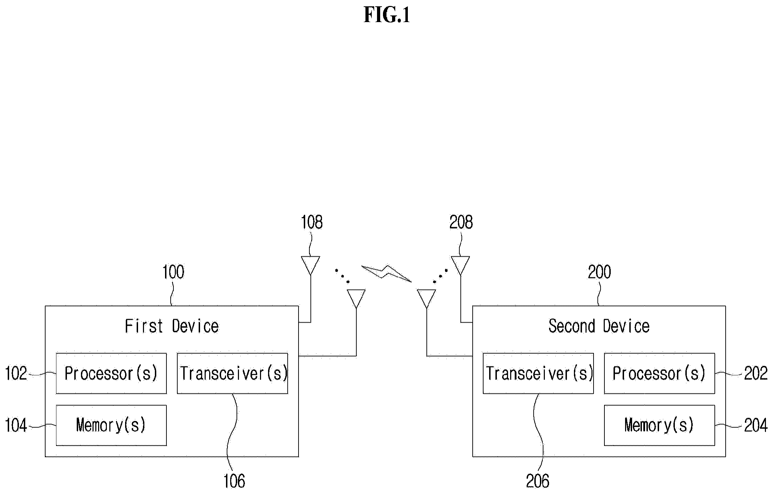

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

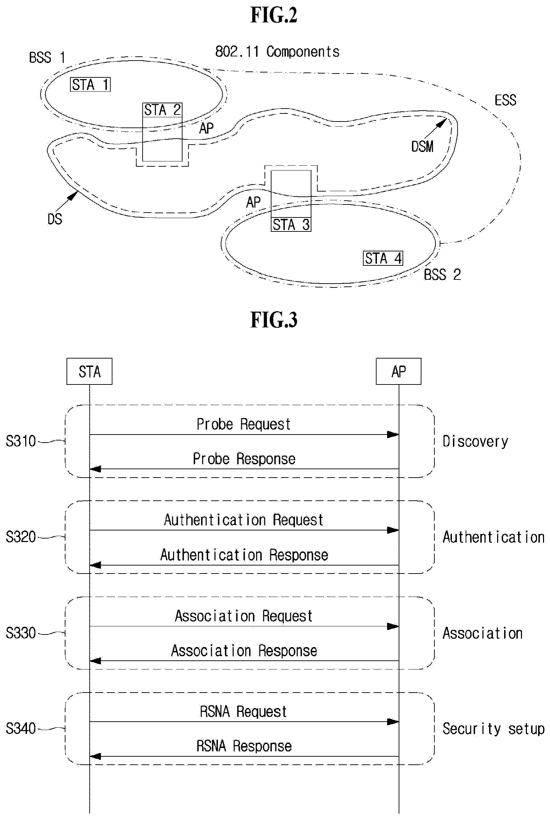

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

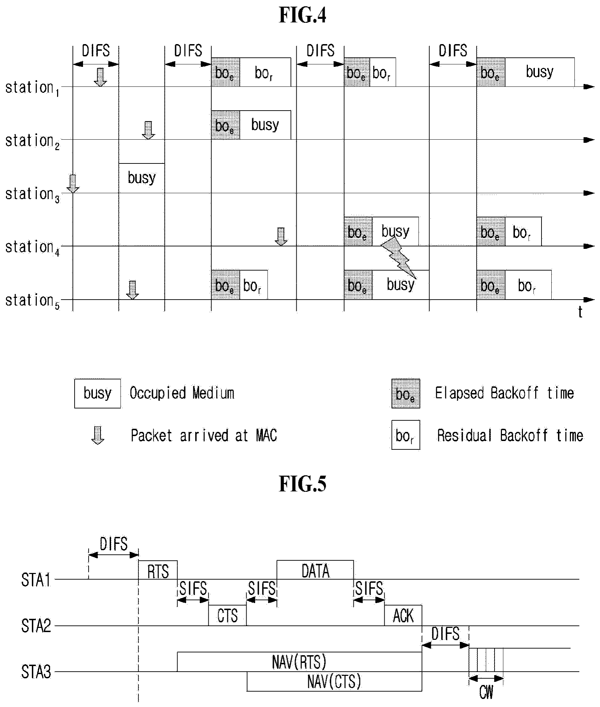

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

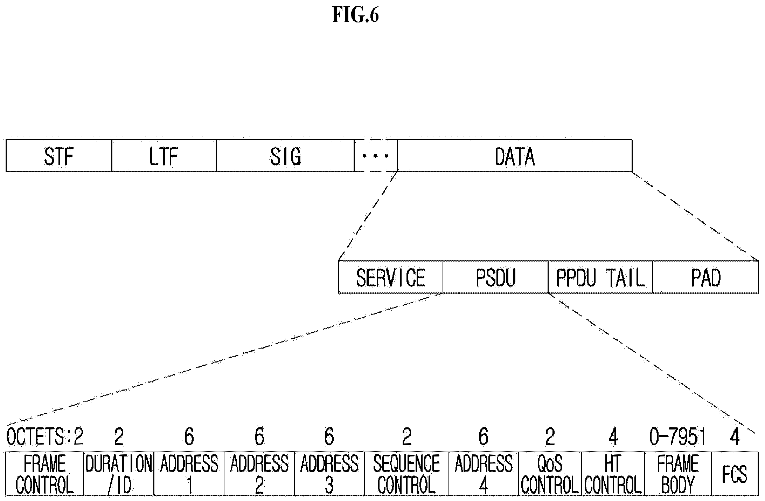

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

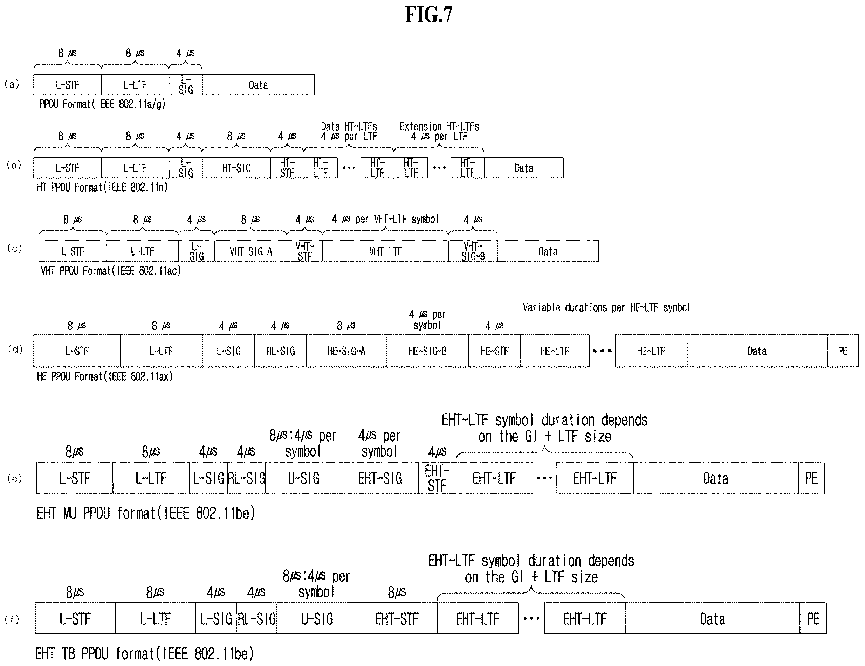

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

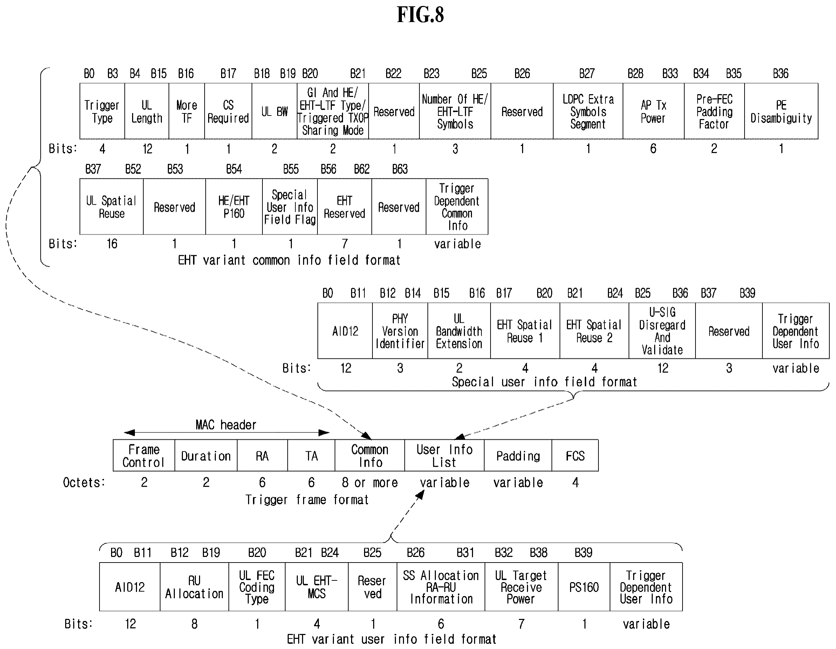

FIG. 8 is a diagram illustrating an example format of a trigger frame to which the present disclosure may be applied.

The trigger frame may allocate resources for transmission of one or more TB PPDUs and request transmission of TB PPDUs. The trigger frame may also include other information required by the STA, which transmits the TB PPDU in response. The trigger frame may include common information and user information list fields in the frame body.

The common info field is information commonly applied to the transmission of one or more TB PPDUs requested by a trigger frame, such as trigger type, UL length, presence or absence of a subsequent trigger frame (e.g., More TF), CS (channel sensing) request, UL BW (bandwidth), HE/EHT P160, special user info field flag, etc.

The 4-bit trigger type subfield may have values from 0 to 15. Among them, the values 0, 1, 2, 3, 4, 5, 6, and 7 of the trigger type subfield are defined to correspond to basic, BFRP (Beamforming Report Poll), MU-BAR (multi user-block acknowledgement request), MU-RTS (multi user-request to send), BSRP (Buffer Status Report Poll), GCR (groupcast with retries) MU-BAR, BQRP (Bandwidth Query Report Poll), and NFRP (NDP Feedback Report Poll), respectively, and the values 8 to 15 are defined as reserved.

Among the common information, the trigger dependent common info subfield may include information that is optionally included based on the trigger type.

A special user info field may be included in the trigger frame. The special user info field does not include user specific information, but includes extended common information that is not provided in the common info field.

The user info list includes zero or more user info fields. FIG. 8 illustrates an example of an EHT variant user info field format.

The AID12 subfield basically indicates that it is a user info field for the STA with the corresponding AID. In addition, if the AID12 field has a specific predetermined value, it may be used for other purposes, such as allocating a random access (RA)-RU or being configured as a special user info field. A special user info field is a user info field that does not include user-specific information but includes extended common information not provided in the common info field. For example, the special user info field may be identified by an AID12 value of 2007, and the special user info field flag subfield within the common info field may indicate whether the special user info field is included.

The RU allocation subfield may indicate the size and location of RU/MRU. For this purpose, the RU allocation subfield may be interpreted together with the PS 160 (primary/secondary 160MHz) subfield of the user information field, the UL BW subfield of the common information field, etc.

### Relay transmission procedure

In the next generation wireless LAN system, ultra-high reliability (UHR) can be supported when transmitting signals to STAs. In order to support UHR, various technologies for high throughput, low delay, and extended range delay can be applied.

The present disclosure can expand wireless LAN coverage/range for reliable transmission of various IoT devices as well as outdoors, and for expanding wireless LAN coverage/range, an AP can receive signals transmitted from STAs through a relay transmission procedure.

In this way, for signal transmission and reception between relay STA and non-AP STA(s), the AP may set up a transmission opportunity (TXOP) and allocate it to the relay STA and/or non-AP STA(s). In the present disclosure, a method for allocating or sharing a TXOP set up by an AP to relay STA and non-AP STA for signal transmission and reception through relay operation will be described.

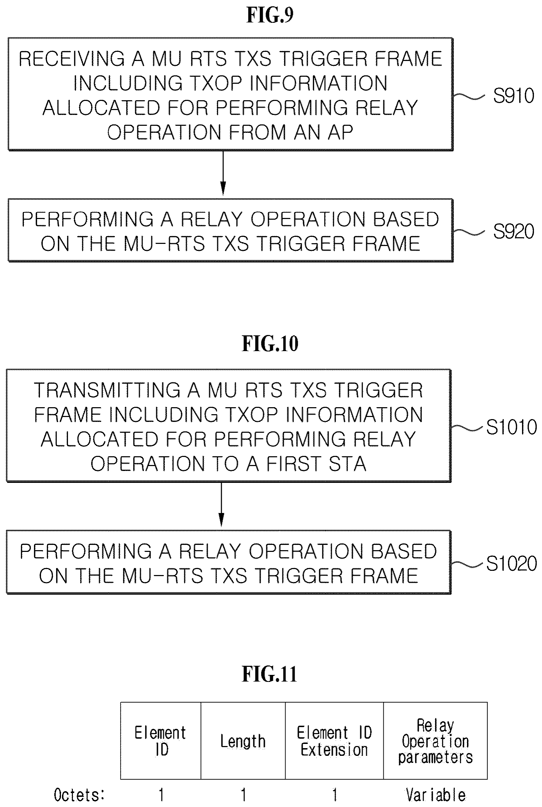

FIG. 9 is a flowchart illustrating a method performed by a first STA according to an embodiment of the present disclosure. In FIGS. 9 and 10 , the first STA may be a non-AP STA. For example, the first STA may be a non-AP STA operating as a relay STA, but is not limited thereto. In addition, the second STA may refer to a non-AP STA.

The first STA may receive a multi-user (MU) RTS (request to send) TXS (transmission opportunity sharing) trigger frame including TXOP information allocated for performing relay operation from an access point (AP) (S910).

Here, the common information field of the MU-RTS TXS trigger frame may include first information indicating that the MU-RTS TXS trigger frame is for a TXOP sharing procedure for relay operation. The first information may be based on at least one of a specific subfield related to the relay operation or a triggered TXOP sharing mode subfield.

In addition, the TXOP information allocated for performing the relay operation may include a TXOP length set for the relay operation, TXOP sharing related information (e.g., information indicated by the triggered TXOP sharing mode subfield, etc.), etc.

For example, the first information may be indicated by a specific subfield (e.g., a relay subfield) included in the common information field. The specific subfield may be set to the 64th bit (B63) of the common information field, but is not limited thereto. The specific subfield may also be set to at least one bit among B4 to B15, B20 to B26, and B28 to B62. In this case, the triggered TXOP shared mode subfield value may be set to 2, but is not limited thereto.

In another example of the present disclosure, the triggered TXOP sharing mode subfield value may be set to 3. The triggered TXOP sharing mode subfield set to 3 may indicate that the corresponding MU-RTS TXS trigger frame is for a TXOP sharing procedure for relay operation.

The MU-RTS TXS trigger frame may include one or more user information fields. For example, a first user information field corresponding to a first STA among the one or more user information fields may include at least one of an ID (identity) of the first STA, a group ID associated with a group of STAs participating in the relay operation, second information about the role of the first STA in the relay operation, or third information indicating whether the relay operation is an uplink transmission operation or a downlink transmission operation.

Here, the group ID may be set by at least one of a request frame or a response frame for relay operation.

Additionally, the first user information field may include at least one of a time duration allocated to the first STA for relay operation or a start time of the time duration. In addition, ID information for the relay operation may be set in at least one bit from the 32nd bit (B33) to the 40th bit (B39) of the first user information field.

Meanwhile, the TXOP for the relay operation shared based on the MU-RTS TXS trigger frame may not include the duration in which the AP transmits to the first STA. And, the TXOP for the relay operation shared based on the MU-RTS TXS trigger frame may be set within the maximum TXOP threshold duration defined for transmitting a physical layer protocol data unit (PPDU).

The first STA may perform a relay operation based on the MU-RTS TXS trigger frame (S920).

As an example of the present disclosure, based on the third information indicating that the relay operation is a downlink transmission operation, the role of the first STA may be set as a transmitter by the second information. Here, the first STA may transmit data received from the AP to at least one second STA (i.e., non-AP STA(s)) within the time duration within the TXOP allocated to the MU-RTS TXS trigger frame.

As another example, based on the third information indicating that the relay operation is an uplink transmission operation, the role of the first STA may be set to a receiver by the second information. Here, the first STA may transmit data received from at least one second STA to the AP within the TXOP allocated to the MU-RTS TXS trigger frame.

The method performed by the first STA described in the example of FIG. 9 may be performed by the first device (100) of FIG. 1. For example, one or more processors (102) of the first device (100) of FIG. 1 may receive an MU RTS TXS trigger frame including TXOP information allocated for performing a relay operation from an AP through one or more transceivers (106). Then, the one or more processors (102) may perform a relay operation based on the MU-RTS TXS trigger frame.

The above memory (104) can store instructions for performing the method described in the example of FIG. 9 when executed by one or more processors (102).

FIG. 10 is a flowchart illustrating a method performed by an AP according to one embodiment of the present disclosure.

The AP may transmit an MU-RTS TXS trigger frame including TXOP information allocated for performing relay operation to the first STA (S1010).

Specifically, the AP may generate an MU-RTS TXS trigger frame including information related to a TXOP sharing procedure for relay operation. The configuration of the MU-RTS TXS trigger frame has been described with reference to FIG. 9, so a redundant description will be omitted.

The AP may perform a relay operation based on the MU-RTS TXS trigger frame (S1020). That is, the AP may perform a relay operation within the TXOP shared/allocated by the MU-RTS TXS trigger frame.

The method performed by the AP described in the example of FIG. 10 may be performed by the second device (200) of FIG. 1. For example, one or more processors (202) of the second device (200) of FIG. 10 may transmit an MU RTS TXS trigger frame including TXOP information for a relay operation to the first STA through one or more transceivers (206). The one or more processors (202) may perform a relay operation based on the MU-RTS TXS trigger frame.

Furthermore, one or more memories (204) of the second device (200) may store commands for performing the method described in the example of FIG. 10 when executed by one or more processors (202).

The following describes in detail how to indicate and/or share a TXOP allocated for relay operation.

Regardless of the location of the STA within the BSS, in the next-generation wireless LAN system, signal transmission and reception using a relay transmission procedure can be supported/applied to ensure stable signal (i.e., reliable signal) transmission, increase coverage for signal transmission, and eliminate holes where signals cannot reach.

To reduce the complexity of implementing a relay transmission procedure, a relay transmission procedure controlled by an AP in a next-generation wireless LAN system is described. However, this is only one embodiment, and the description of the present disclosure described below can be applied not only to a relay transmission procedure controlled by an AP, but also to all relay transmission procedures.

In the present disclosure, a Relay STA controlled by an AP is referred to as an AP controlled Relay STA (hereinafter, ACRS).

ACRS may perform relay transmission for data received from an AP within a BSS. Here, control of ACRS for relay transmission procedure may be performed by the AP.

That is, ACRS may transmit a signal received from the AP to an end-user/STA based on control information received from the AP, or transmit a signal received from multiple non-AP STAs to the AP.

ACRS may mean an independent relay device that performs only relay transmission procedures and/or a non-AP STA that supports relay transmission procedures.

In order to indicate that a relay operation for transmitting and receiving signals through a relay STA is in progress within a BSS, an AP may indicate to the STA(s) within the BSS whether or not the relay operation is in progress through a beacon frame.

Accordingly, the AP may transmit a beacon frame including information related to relay operation and/or relay operation support information (e.g., information on whether relay operation is supported, etc.) to the STA(s). In addition, the information related to relay operation and/or relay operation support information may be set/defined on order 92 or reserved bits of the beacon frame body.

If the AP supports relay operation, the (re)association request/response frame format, probe request/response frame format, and/or (re)authentication frame format exchanged between the AP and non-AP STA may include a relay operation element.

As an example of the present disclosure, as illustrated in FIG. 11, a relay operation element may include an element ID field, a length field, an element ID extension field, and a relay operation parameter field.

The relay operation parameters included in the relay operation element may include a BW subfield for relay transmission, a subfield indicating whether the relay transmission is DL or UL-based transmission, a subfield indicating the maximum number of spatial streams (NSS), a subfield indicating a modulation and coding scheme (MCS), a subfield indicating the number of STAs participating in the relay operation, and a subfield indicating whether beamforming is performed.

Additionally, the AP and non-AP STA may confirm/negotiate support for relay operation through signal exchange including capability or/and extended capability. In this case, relay operation support information can be indicated through the extended capability element.

For example, the capability element may include a relay subfield and a relay support subfield. The relay subfield may indicate whether the corresponding STA can operate as a relay STA. The relay support subfield may indicate whether signal transmission and reception are supported through the relay STA (i.e., through relay operation).

Each of the relay subfield and the relay support subfield may consist of 1 bit. That is, the relay STA may set the relay subfield value to 1 to indicate that it is a relay STA. In addition, the relay STA may set the relay support subfield value to 1 to indicate that it participates in a relay participation operation to transmit and receive signals. On the other hand, a non-AP STA that transmits and receives signals through a relay operation does not operate as a relay STA and therefore may set the relay subfield value to 0. In addition, the non-AP STA may set the relay support subfield value to 1 to indicate that it participates in a relay participation operation to transmit and receive signals.

Only relay STAs with the relay support subfield value set to 1 in the capability element and relay STAs/non-AP STAs with the relay support subfield value set to 1 can perform relay operations within the BSS.

A capability element including a relay subfield and a relay support subfield may be an element defined within a HE/EHT/UHR/next-generation wireless LAN system. The relay subfield and the relay support subfield may be configured depending on whether a non-AP STA performing a relay operation is associated with a HE/EHT/UHR/next-generation wireless LAN system.

### Embodiment 1

Embodiment 1 relates to a procedure for transmitting and receiving TXOP information for performing relay transmission and reception operations through an MU (multi-user)-RTS (request to send) TXS (transmission opportunity sharing) trigger frame. That is, an AP can transmit TXOP information for performing relay transmission and reception by transmitting an MU-RTS TXS trigger frame to non-AP STA(s) or/and a relay STA.

Here, TXOP sharing for relay operation or transmission may be performed by the AP after the signal transmission/reception for the last PPDU is successful or an ACK frame is transmitted for the previous signal transmission/reception between relay STAs (and/or non-AP STAs). In the remaining cases except for the cases described above, the backoff procedure of the basic wireless LAN system may be performed.

### Embodiment 1-1

Embodiment 1-1 relates to the configuration of an MU-RTS TXS trigger frame for relay operation and a procedure related thereto. In order to indicate that TXOP-related information transmitted/allocated through the MU-RTS TXS trigger frame is information for relay operation, the MU-RTS TXS trigger frame can be defined according to the method described below.

As an example of the present disclosure, the common information field of the MU-RTS TXS trigger frame may include information for indicating that the corresponding trigger frame is used for a relay operation. For example, a relay subfield may be set/defined on the 64th bit (B63) of the common information field included in the MU-RTS TXS trigger frame to indicate that the corresponding trigger frame is used for a relay operation. For example, when the B63 (i.e., the relay subfield) is set to 1, this may indicate that the corresponding trigger frame is used for a relay operation. However, this is only an example, and the name of the relay subfield may be changed.

Additionally or alternatively, in the common information field of the MU-RTS TXS trigger frame, at least one of a UL length subfields (B4 to B15), GI and HE-LTF type subfields (B20 to B21), MU-MIMO HE-LTF mode subfield (B22), number of HE-LTF symbols and midamble periodicity subfields (B23 to B25), UL STBC subfield (B26), LDPC extra symbol segment subfields (B34 to B35), AP Tx power subfields (B28 to B33), Pre-FEC padding factor subfields (B34 to B35), PE Disambiguity subfield (B36), UL spatial reuse subfields (B37 to B52), Doppler subfield (B53), and UL HE-SIG-A2 reserved Subfields (B54 to B62) may be reserved. Accordingly, the relay subfield may be set to one of the reserved bits described above in the common field of the MU-RTS TXS trigger frame.

Additionally, the common information field of the MU-RTS TXS trigger frame may include a triggered TXOP Sharing mode subfield. For example, the triggered TXOP Sharing mode subfield value is set to 2, which may indicate TXOP sharing for signal transmission and reception between non-AP STAs.

For example, through the relay subfield and the triggered TXOP sharing mode subfield of the common information field, the relay STA and the non-AP STA may confirm that the TXOP sharing/configuration set through the MU-RTS TXS trigger frame is the TXOP sharing/configuration for relay operation.

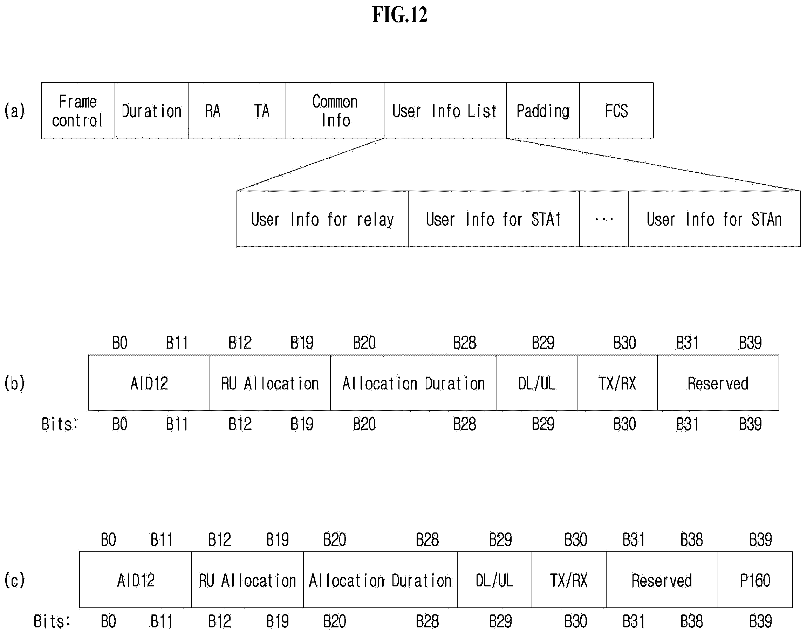

Additionally, the MU-RTS TXS trigger frame transmitted to provide TXOP information for the relay operation may include user field(s) for the relay STA and non-AP STA(s) participating in the relay operation. As an example of the present disclosure, as illustrated in (a) of FIG. 12, the MU-RTS TXS trigger frame used for the relay operation may include one or more user fields.

For example, as illustrated in (a) of FIG. 12, an MU-RTS TXS trigger frame for relay operation may include a user information list, and a user information field for a relay STA may be placed at the front within the user information list. However, this is merely an example, and the user information field for a relay STA may be placed without limitation within the user information list.

The user information field of the MU-RTS TXS trigger frame transmitted for relay operation may include at least one of the AID 12 subfield, the RU allocation subfield, the allocation duration subfield, the PS160 subfield, the DL/UL subfield, and the TX/RX subfield.

Specifically, the AID 12 subfield may include/indicate STA IDs for relay STAs and non-AP STAs participating in the relay operation or a group ID (GID) assigned to destination STAs participating in the relay operation. For example, when a GID is used for the relay operation, the user information field may be composed of two user information fields, and each of the two user information fields may include an ID and a GID of a relay STA, respectively.

The RU allocation subfield may indicate information about the RU used by the relay STA and non-AP STA that received the trigger frame to transmit the CTS frame.

The allocation duration subfield may indicate a time duration allocated to a relay STA and a non-AP STA for relay operation. For example, a time duration of 16 us may be allocated by the allocation duration subfield.

When a relay operation is performed, the allocation duration values included in each user information field may all be set to the same value. However, this is only one embodiment, and when a relay STA and a non-AP STA perform a relay operation one-on-one, the allocation period subfield of the user information field corresponding to each STA (e.g., relay STA and/or (destination) non-AP STA) may be configured with information about the time duration during which each STA performs the relay operation. Accordingly, the time duration indicated by each allocation duration subfield may be different.

For example, if different allocation durations are set for each STA, the user information field for each STA may include a start time subfield indicating the start time of the allocated time duration to indicate the start time of the allocated time duration. As another example, the allocation interval may be composed of start time information and allocated time duration information, and each piece of information may be composed of a separate subfield.

Each STA may identify the allocated time duration and the start time of the allocated time duration through the allocated duration subfield and/or the start time subfield. Each STA may implicitly identify the end time of the allocated duration through the indicated start time and the allocated time duration.

The TXOP shared through the MU-RTS TXS trigger frame may be set within the maximum TXOP limit defined for PPDU transmission (i.e., aPPDUMaxTime = 5.484 ms).

In addition, the TXOP sharing set for relay operation may be set except for the duration in which the AP transmits a signal to the relay STA. The STA addressed through the user information field may clearly identify the duration in which the signal is transmitted and received on the relay STA and the destination during relay operation, and thus an efficient PS (power saving) operation can be performed.

The PS160 subfield may be used to indicate whether a 320 MHz channel is being used. For example, if the PS160 subfield value is set to 1, it may indicate that a 320 MHz channel is being used.

The DL/UL subfield may indicate whether the relay operation is a DL-based operation (e.g., an operation in which a relay STA transmits data received from an AP to non-AP STA(s)) or a UL-based operation (e.g., an operation in which a relay STA transmits data received from non-AP STA(s) to an AP). For example, when the DL/UL subfield value is 1 (or 0), this may indicate that the relay operation is a DL-based operation. And, when the DL/UL subfield value is 0 (or 1), it may indicate that the relay operation is a UL-based operation.

The TX/RX subfield may indicate whether the relay STA and/or non-AP STA(s) act as a transmitter or a receiver.

For example, assume that the relay STA transmits a signal/data received from the AP to a non-AP STA, as the DL/UL subfield value is set to 1 (or 0) (e.g., indicating that the relay operation is a DL-based operation). In this case, the TX/RX subfield transmitted to the relay STA may indicate that the relay STA is a transmitter, and the corresponding TX/RX subfield value may be set to 1 (or 0).

As another example, assume that the relay STA transmits signals/data received from non-AP(s) to the AP, as the DL/UL subfield value is set to 0 (or 1) (e.g., indicating that the relay operation is a UL-based operation). In this case, the TX/RX subfield transmitted to the relay STA may indicate that the relay STA is a receiver, and the corresponding TX/RX subfield value may be set to 0 (or 1).

Additionally, the format of the user information field described above can be configured as in (b) of FIG. 12 (e.g., format of a HE variant-based user information field) or (c) of FIG. 12 (e.g., format of a EHT variant-based user information field).

When each STA uses the same allocation interval, the user information field may be configured as illustrated in (b) and (c) of FIG. 12. When the user information field for each STA includes a different allocation interval, the user information field format may include a start time subfield. The start time subfield may be set to at least some bits from the 32nd bit (B31) to the 40th bit (B39) of the user information field. In addition, a relay operation ID may be set/assigned to some bits from B31 to B39 of the user information field.

### Embodiment 1-2

Embodiment 1-2 relates to a procedure in which a separate TXOP setting for relay operation is indicated using a triggered TXOP shared mode subfield value. Embodiment 1-1 relates to a method for setting TXOP for relay operation when the TXOP shared mode subfield value is set to 2, while Embodiment 1-2 relates to a method when a triggered TXOP setting for relay operation is used.

For example, the TXOP shared mode subfield may be configured as shown in Table 1. As shown in Table 1, when the triggered TXOP shared mode subfield value is set to 3, it may be indicated that the corresponding MU-RTS TXS trigger frame is for TXOP setup for relay operation.

**[Table 1]**

| TXOP Sharing Mode subfield value | Description |
|---|---|
| 0 | MU-RTS that does not initiate MU-RTS TXOP sharing procedure |
| 1 | MU-RTS that initiates MU-RTS TXOP sharing procedure wherein a scheduled STA can only transmit PPDU(s) addressed to its associated AP |
| 2 | MU-RTS that initiates MU-RTS TXOP sharing procedure wherein a scheduled STA can transmit PPDU(s) addressed to its associated AP or addressed to another STA. |
| 3 | MU-RTS that initiates MU-RTS TXOP sharing procedure for relay transmission |

A relay STA and a non-AP STA participating in relay operation can determine that the MU-RTS TXS trigger frame is for sharing TXOP-related information for relay transmission and reception through the triggered TXOP sharing mode subfield value. If the triggered TXOP sharing mode subfield value is set to 3, the MU-RTS TXS trigger frame can include user information fields for multiple STAs (e.g., two or more user information fields).

For example, the user information field of the MU-RTS TXS trigger frame for relay transmission may include a user information field for the relay STA and user information field(s) for the destination STA(s) participating in the relay transmission.

And, the format of the MU-RTS TXS trigger frame can be configured as in (a) of FIG. 12, and each user information field included in the trigger frame can be configured as in (b) and/or (c) of FIG. 12.

In addition, when the triggered TXOP sharing mode subfield value is set to 3, the configuration of the user information field of the MU-RTS TXS trigger frame may be the same as the configuration described in Embodiment 1-1, so redundant descriptions are omitted. As described above, the user information field may include TXOP-related information shared to perform a relay operation. The shared TXOP-related information may be included/configured identically or differently for each user information field.

Here, the TXOP shared through the MU-RTS TXS trigger frame may be set within the maximum TXOP limit (i.e., aPPDUMaxTime = 5.484 ms) set for PPDU transmission. The TXOP sharing set for relay operation may be set except for the duration in which the AP transmits a signal to the relay STA. The destination STA may perform an efficient PS (power saving) operation using the information.

### Embodiment 2

Embodiment 2 relates to a method for defining a trigger frame variant used for relay operation and allocating a TXOP through the same. That is, Embodiment 1 relates to a method for allocating a TXOP for relay operation through an MU-RTS TXS trigger frame, and Embodiment 2 relates to a method for allocating a TXOP through a separate trigger frame (e.g., a frame based on a relay trigger variant).

A relay trigger frame variant can be defined using a reserved value of the trigger type subfield. For example, as shown in Table 2, if the trigger type subfield value is set to 9, this can indicate that the type of the trigger frame is a relay trigger variant.

**[Table 2]**

| Trigger type subfield value | Trigger frame variant |
|---|---|
| 0 | Basic |
| 1 | Beamforming report poll (BFRQ) |
| 2 | MU-BAR (multi-user block ack request) |
| 3 | MU-RTS (multi-user request to send) |
| 4 | Buffer status report poll |
| 5 | GCR(groupcast with retries) MU-BAR |
| 6 | Bandwidth query report poll (BQRP) |
| 7 | NDP feedback report poll (NFRP) |
| 8 | Ranging/Sensing |
| 9 | Relay |
| 10-15 | Reserved |

Additionally, the dependent common info field of the relay trigger variant (i.e., the relay trigger frame) may include a (relay trigger) subtype subfield indicating a subvariant. The dependent common info field may be composed of 1 byte and may include a (relay trigger) subtype subfield and a relay ID subfield. The (relay trigger) subtype subfield may be used to indicate a subvariant of the relay trigger variant. In addition, the relay ID subfield may indicate ID information for identifying a relay operation performed within a BSS. For example, the relay ID subfield may assign different IDs for each relay operation. As an example, the (relay trigger) subtype subfield may be configured as shown in Table 3.

**[Table 3]**

| Relay trigger subtype subfield value | Relay trigger frame subvariant |
|---|---|
| 0 | Poll |
| 1 | Relaying |
| 2 | Sounding |
| 3 | Report |
| 4 | TXOP sharing |
| 5-15 | Reserved |

Specifically, among the relay trigger frame sub-variants, the poll (or polling) can be used to solicit a relay operation. That is, the AP may transmit a relay trigger frame with the sub-variant set to poll (or polling) to a relay STA to perform a relay operation. For example, a relay trigger frame (i.e., a polling frame) with the sub-variant set to poll (or polling) may be used to check whether it can participate in the relay operation. A response to the polling frame may be transmitted and received via a CTS frame. For CTS frame transmission, the polling frame may include frequency/time allocation information for CTS frame transmission.

For example, a polling frame may be transmitted to non-AP STAs having relay operation capability, and the AP may determine whether the non-AP STA participates in the relay operation through a response frame to the polling frame transmitted by the non-AP STA.

Among the relay trigger frame subvariants, relaying may be used to request data to be transmitted from a non-AP STA to an AP. The relaying subvariant is a general term for a trigger subvariant used to perform UL relay communication. The AP may transmit the corresponding trigger frame with the subvariant set to relaying to request UL relay communication to the relay STA. Additionally or alternatively, the relay STA may transmit the corresponding trigger frame with the subvariant set to relaying to the destination STA to request data transmission.

Whether an STA receiving a trigger frame with a sub-variant set to relaying is a relay STA or a non-AP STA (i.e., a destination STA) may be identified through a user information field of the trigger frame. In addition, the trigger frame may include information (i.e., bit indication information) indicating whether the relaying sub-variant is for initiation/request of UL relay communication or initiation/request of UL data transmission.

For example, whether the relaying subvariant is for initiating/requesting UL relay communication or initiating/requesting UL data transmission can be indicated via the UL relay request bit. For example, if the UL relay request bit value is set to 1 (or 0), it may mean initiating/requesting UL relay communication, and if the UL relay request bit value is set to 0 (or 1), it may mean initiating/requesting UL data transmission.

Sounding among relay trigger frame subvariants may be used to trigger NDP transmission for DL/UL channel measurement between relay STA and non-AP STA.

Reporting among relay trigger frame subvariants may be used to request feedback on channel measurement results measured by a non-AP STA or relay STA.

TXOP sharing among relay trigger frame subvariants can be used to share information about the TXOP used during relay operation.

Additionally, when a TXOP shared subvariant is set (i.e., when a TXOP shared trigger frame is transmitted from the AP), the corresponding trigger frame may be configured as in (a) of FIG. 12, and the user information field of the trigger frame may be configured as in (b) and/or (c) of FIG. 12. Therefore, the configuration of the trigger frame has been described in Embodiment 1-1, and a redundant description thereof will be omitted.

Here, the TXOP shared through the TXOP sharing trigger frame may be set within the maximum TXOP limit (i.e., aPPDUMaxTime = 5.484 ms) set for PPDU transmission. The TXOP sharing set for relay operation may be set except for the duration in which the AP transmits a signal to the relay STA.

### Embodiment 3

Embodiment 3 relates to a TXOP allocation/sharing method for relay operation using a group ID.

For relay operation, the AP may assign a group ID to the relay STA and the non-AP STA participating in the relay operation. The GID may be determined when the relay STA and the non-AP STA associate with the AP or when the relay operation is initiated. As another example, the GID may be determined through the exchange of request and response frames for relay communication.

The GID for relay communication may be set for each relay operation ID or relaying ID used to identify the relay operation. That is, the same GID may be assigned/used even when the relay operation ID or relaying ID is different. For example, a GID set to 2 may be used when the relay operation ID (i.e., RID) is set to 1 and also when the RID is set to 2. The relay STA/non-AP STA participating in the relay operation when the RID is set to 1 may be different from the relay STA/non-AP STA participating in the relay operation when the RID is set to 2.

For example, a GID for relay communication may be composed of 12 bits. The AP may use the GID for the assigned relay operation to allocate TXOP for the relay operation. At this time, for TXOP allocation, the MU-RTS TXS trigger frame or relay trigger variant described in each of Embodiment 1 (i.e., Embodiment 1-1 and/or Embodiment 1-2) and Embodiment 2 may be used. That is, the MU-RTS TXS trigger frame and relay trigger variant described/defined in each of Embodiment 1 and Embodiment 2 may be used for TXOP allocation.

Information about TXOP allocated for relay operation or TXOP information shared by AP for relay communication can be transmitted to relay STA, non-AP STA(s), or relay STA and non-AP STA(s) participating in relay operation. Accordingly, information about TXOP can be indicated/transmitted through the MU-RTS TXS trigger frame/relay trigger variant using the GID set for relay operation.

As an example of the present disclosure, the configuration of the MU-RTS TXS trigger frame for allocating/sharing information about TXOP for relay operation or TXOP using the MU-RTS TXS trigger frame will be described later.

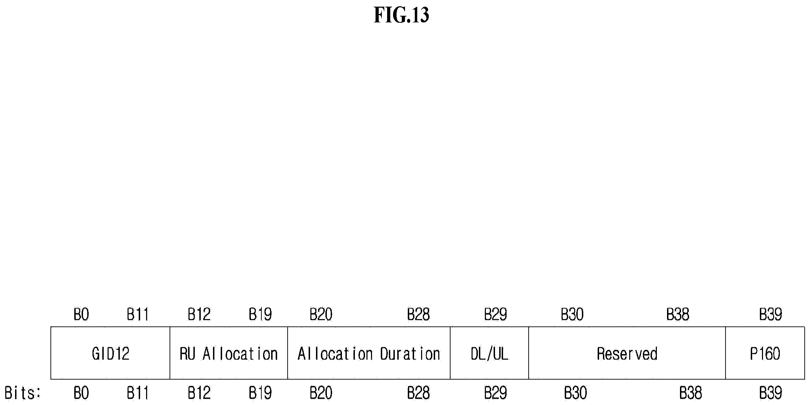

For example, since information about TXOP can be transmitted to all STAs participating in relay operation at once using GID, the MU-RTS TXS trigger frame can include one user (information) field. The user (information) field can include GID12 instead of AID12 as shown in (b) and (c) of FIG. 12. That is, as shown in FIG. 13, the user (information) field of the MU-RTS TXS trigger frame may include a GID12 subfield.

As illustrated in FIG. 13, when the GID12 subfield is included in the user (information) field, the user (information) field may not include a TX/RX subfield indicating a TX/RX role during relay operation of a relay STA and a non-AP STA. In addition, a subfield indicating a relay operation ID may be assigned/set to some of the 31st bit (B30) to the 39th bit (B38) of the user (information) field. Here, FIG. 13 exemplifies an EHT or/and UHR variant user (information) field, and may also be configured as an HE variant user (information) field.

Here, the TXOP shared through the TXOP sharing trigger frame/MU-RTS TXS trigger frame may be set within the maximum TXOP limit (i.e., aPPDUMaxTime = 5.484 ms) set for PPDU transmission. The TXOP sharing set for relay operation may be set except for the duration in which the AP transmits a signal to the relay STA.

As another example of the present disclosure, an MU-RTS TXS trigger frame may include two user (information) fields. Each user (information) field may include a user (information) field for a relay STA and a user (information) field for non-AP STA(s) included in a group. The two user (information) fields may include the same shared time allocation information, but are not limited thereto. Each of the two user (information) fields may include different shared time allocation information.

For a relay STA, the shared time allocation information may indicate interval information for signal transmission and reception between the AP and the relay STA. The user (information) field including the GID may include time interval information for signal transmission and reception between the relay STA and destination STA(s).

The procedure for sharing TXOP using the trigger frame defined as described above can be performed between the AP and the relay STA/non-AP STA before transmitting and receiving data through the relay operation. In this case, the TXOP for the relay operation can be allocated to the relay STA and the non-AP STA participating in the relay operation.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, but may be applied to various WLAN or wireless communication systems other than the IEEE 802.11-based system.

## Claims

1. A method performed by a first station (STA) in a wireless LAN system, the method comprising:
receiving a multi-user (MU) request to send (RTS) transmission opportunity sharing (TXS) trigger frame including transmission opportunity (TXOP) information allocated for performing a relay operation from an access point (AP); and
performing a relay operation based on the MU-RTS TXS trigger frame,
wherein a common information field of the MU-RTS TXS trigger frame includes first information indicating that the MU-RTS TXS trigger frame is for a TXOP sharing procedure for the relay operation, and
wherein the first information is based on at least one of a specific subfield related to the relay operation or a triggered TXOP sharing mode subfield.

2. The method of claim 1, wherein:
the first information is indicated by the specific subfield included in the common information field, and
the specific subfield is set to a 64th bit (B63) of the common information field.

3. The method of claim 1, wherein:
the MU-RTS TXS trigger frame includes at least one user information field, and
a first user information field corresponding to the first STA among the at least one user information field includes at least one of an identity (ID) of the first STA, a group ID related to a STA group participating in the relay operation, second information about a role of the first STA in the relay operation, or third information indicating whether the relay operation is an uplink transmission operation or a downlink transmission operation.

4. The method of claim 3, wherein:
the first user information field includes at least one of a time duration allocated to the first STA for the relay operation or a start time of the time duration.

5. The method of claim 3, wherein:
ID information for the relay operation is set in at least one bit of A 32nd bit (B33) or a 40th bit (B39) of the first user information field.

6. The method of claim 1, wherein:
the triggered TXOP sharing mode subfield value is set to 3, and
the first information is indicated by the triggered TXOP sharing mode subfield.

7. The method of claim 3, wherein:
based on the third information indicating that the relay operation is a downlink transmission operation, the role of the first STA is set to a transmitter by the second information, and
based on the third information indicating that the relay operation is an uplink transmission operation, the role of the first STA is set to a receiver by the second information.

8. The method of claim 1, wherein:
the TXOP for the relay operation shared based on the MU-RTS TXS trigger frame does not include a duration in which the AP transmits to the first STA.

9. The method of claim 1, wherein:
the TXOP for the relay operation shared based on the MU-RTS TXS trigger frame is set within a maximum TXOP threshold duration defined for transmitting a physical layer protocol data unit (PPDU).

10. The method of claim 3, wherein:
the group ID is set by at least one of a request frame or a response frame for the relay operation.

11. A first station (STA) operating in a wireless LAN system, the first STA comprising:
at least one transceiver; and
at least one processor connected to the at least one transceiver,
wherein the at least one processor is configured to:
receive, through the at least one transceiver, a multi-user (MU) request to send (RTS) transmission opportunity sharing (TXS) trigger frame including transmission opportunity (TXOP) information allocated for performing a relay operation from an access point (AP); and
perform a relay operation based on the MU-RTS TXS trigger frame,
wherein a common information field of the MU-RTS TXS trigger frame includes first information indicating that the MU-RTS TXS trigger frame is for a TXOP sharing procedure for the relay operation, and
wherein the first information is based on at least one of a specific subfield related to the relay operation or a triggered TXOP sharing mode subfield.

12. A method performed by an access point (AP) in a wireless LAN system, the method comprising:
transmitting a multi-user (MU) request to send (RTS) transmission opportunity sharing (TXS) trigger frame including transmission opportunity (TXOP) information allocated for performing a relay operation to a first station (STA); and
performing a relay operation based on the MU-RTS TXS trigger frame,
wherein a common information field of the MU-RTS TXS trigger frame includes first information indicating that the MU-RTS TXS trigger frame is for a TXOP sharing procedure for the relay operation, and
wherein the first information is based on at least one of a specific subfield related to the relay operation or a triggered TXOP sharing mode subfield.

13. An access point (AP) performed in a wireless LAN system, the AP comprising:
at least one transceiver; and
at least one processor connected to the at least one transceiver,
wherein the at least one processor is configured to:
transmit, through the at least one transceiver, a multi-user (MU) request to send (RTS) transmission opportunity sharing (TXS) trigger frame including transmission opportunity (TXOP) information allocated for performing a relay operation to a first station (STA); and
perform a relay operation based on the MU-RTS TXS trigger frame,
wherein a common information field of the MU-RTS TXS trigger frame includes first information indicating that the MU-RTS TXS trigger frame is for a TXOP sharing procedure for the relay operation, and
wherein the first information is based on at least one of a specific subfield related to the relay operation or a triggered TXOP sharing mode subfield.

14. A processing device configured to control a first station (STA) in a wireless LAN system, the processing device comprising:
at least one processor; and
at least one computer memory operatively coupled to the at least one processor and storing instructions for performing operations upon being executed by the at least one processor;
the operations include:
receiving a multi-user (MU) request to send (RTS) transmission opportunity sharing (TXS) trigger frame including transmission opportunity (TXOP) information allocated for performing a relay operation from an access point (AP); and
performing a relay operation based on the MU-RTS TXS trigger frame,
wherein a common information field of the MU-RTS TXS trigger frame includes first information indicating that the MU-RTS TXS trigger frame is for a TXOP sharing procedure for the relay operation, and
wherein the first information is based on at least one of a specific subfield related to the relay operation or a triggered TXOP sharing mode subfield.

15. At least one non-transitory computer readable medium storing at least one instruction,
based on the at least one instruction being executed by at least one processor, an apparatus for performing communication in a wireless LAN system controls to:
receive a multi-user (MU) request to send (RTS) transmission opportunity sharing (TXS) trigger frame including transmission opportunity (TXOP) information allocated for performing a relay operation from an access point (AP); and
perform a relay operation based on the MU-RTS TXS trigger frame,
wherein a common information field of the MU-RTS TXS trigger frame includes first information indicating that the MU-RTS TXS trigger frame is for a TXOP sharing procedure for the relay operation, and
wherein the first information is based on at least one of a specific subfield related to the relay operation or a triggered TXOP sharing mode subfield.
